# EUROPÄISCHE PATENTANMELDUNG

(11) **EP 4 390 498 A1**
(43) Veröffentlichungstag der Anmeldung: **26.06.2024**
(21) Anmeldenummer: 23217214.8
(22) Anmeldetag: 15.12.2023
(51) Int. Cl.: G02B 23/16, G01J 3/06, G01J 3/28

(54) **ANORDNUNG ZUR BEOBACHTUNG EINES HIMMELSKÖRPERS SOWIE VERFAHREN ZUM SCANNEN EINES HIMMELSKÖRPERS**

(30) Priorität: 22.12.2022 DE 102022134644
(71) Anmelder: Weigele Scientific GmbH, 88605 Messkirch (DE)
(72) Erfinder: Weigele, Uwe Dieter, 88605 Meßkirch (DE)
(74) Vertreter: Westphal, Mussgnug & Partner Patentanwälte mbB

(57) **Zusammenfassung**

Anordnung (38) zur Beobachtung eines Himmelskörpers umfassend
• ein Beobachtungsinstrument (11) mit einem Spektrographen (20) zur Zerlegung von durch die Eingangsöffnung (14) einfallendem Licht in Spektrallinien (23) sowie mindestens einem elektronischen Bildsensor (24) zur Detektion mindestens einer der Spektrallinien (23),
• eine Ausgleichsvorrichtung (40) mit mindestens einer Ausgleichsachse (48, 56, 58) zum Ausgleich einer durch die Erdrotation hervorgerufenen Relativbewegung zwischen dem Himmelskörperbild und dem Beobachtungsinstrument (11),
• mindestens eine Scanachse (45, 47, 63) zur Erzeugung einer Relativbewegung zwischen dem Himmelskörperbild und dem Beobachtungsinstrument (11),
sowie
Verfahren zum Bewegen eines Himmelskörperbildes gegenüber einem Beobachtungsinstrument (11) unter Verwendung der Anordnung (38) .

## Beschreibung

Die Erfindung betrifft eine Anordnung zur Beobachtung eines Himmelskörpers sowie ein Verfahren zum Scannen eines Himmelskörpers.

Bei der Beobachtung von Himmelskörpern wird in der Regel mit einer geeigneten Vorrichtung, beispielsweise einer Linse, ein Bild des zu beobachtenden Himmelskörpers auf oder in einem Beobachtungsinstrument erzeugt. Dabei liegt die Situation vor, dass sich dieses Himmelskörperbild aufgrund der Erddrehung gegenüber dem auf der Erde befindlichen Beobachtungsinstrument bewegt. Dieser Effekt ist in verschiedenen Beobachtungssituationen nicht erwünscht, beispielsweise bei der Langzeitbeobachtung von Himmelskörpern oder der Erstellung von langzeitbelichteten Aufnahmen von Himmelskörpern. Zur Kompensation dieses Effektes sind Vorrichtungen wie beispielsweise Zölostaten bekannt, die eine der Erddrehung entsprechende Nachführung des Beobachtungsinstruments ermöglichen.

Zur Beobachtung der Sonne werden unter anderem sogenannte Spektroheliographen als Beobachtungsinstrumente eingesetzt. Ein Spektroheliograph dient der Erzeugung eines monochromatischen Bildes der Sonne. Dabei fällt das Sonnenlicht durch das Objektiv eines Teleskops auf einen Eingangsspalt des Spektroheliographen, sodass auf dem Eingangsspalt ein Sonnenbild erzeugt wird. Durch den Eingangsspalt tritt ein schmaler Ausschnitt des Sonnenbilds hindurch und wird, beispielsweise mittels eines Beugungsgitters, in seine Spektrallinien zerlegt. Durch die isolierte Aufnahme einer der Spektrallinien mittels einer Fotoplatte kann eine monochromatische Aufnahme des Ausschnitts des Sonnenbilds erstellt werden. In neueren Bauformen des Spektroheliographen wird die Fotoplatte häufig durch einen elektronischen Bildsensor ersetzt. Dies ist beispielsweise aus der US 7 209 229 B2 bekannt.

Um nicht nur einen Ausschnitt des Sonnenbilds sondern das gesamte Sonnenbild abbilden zu können, ist es erforderlich, das Sonnenbild gleichmäßig über den Eingangsspalt zu bewegen. Eine derartige Bewegung eines Himmelskörperbilds über das Beobachtungsinstrument wird auch als "Scannen" bezeichnet. Dabei ist es offensichtlich unerheblich, ob das Himmelkörperbild in Bezug auf das Beobachtungsinstrument bewegt wird, oder ob das Beobachtungsinstrument in Bezug auf das Himmelkörperbild bewegt wird. Wesentlich ist allerdings eine Koordinierung der Bewegungsgeschwindigkeit des Himmelkörperbildes mit der Fotoplatte bzw. dem elektronischen Bildsensor. Um die Koordinierung zu vereinfachen wird vorzugsweise eine konstante Bewegungsgeschwindigkeit zwischen dem Beobachtungsinstrument und dem Himmelkörperbild gewählt.

Die einfachste Möglichkeit, das Himmelkörperbild über das Beobachtungsinstrument zu bewegen besteht darin, die Erdrotation und damit natürliche Bewegung des Himmelkörperbilds gegenüber einem auf der Erde feststehenden Beobachtungsinstrument zu nutzen. Nachteilig an diesem Vorgehen ist jedoch die relativ lange Laufzeit des vollständigen Himmelkörperbilds über das Beobachtungsinstrument.

Um unabhängig von der natürlichen Bewegung des Himmelkörperbilds aufgrund der Erdrotation zu sein, wurden am Beispiel des Spektroheliographen verschiedene Techniken entwickelt, bei denen mittels eines Zölostaten bzw. mittels eines Heliostaten zunächst ein feststehendes Sonnenbild erzeugt wird, um dann eine kontrollierbare Relativbewegung zwischen dem Eingangsspalt und dem Sonnenbild erzeugen zu können. In den Observatorien von Meudon und Coimbra wird dazu beispielsweise das zwischen dem Zölostaten und dem Eingangsspalt angeordnete Fernrohrobjektiv verschoben. Die US 2011 / 0 051 121 A1 beschreibt eine Verschiebung des Eingangsspalts.

Nachteilig an den bekannten Anordnungen und Verfahren zum Bewegen des Himmelkörperbilds über das Beobachtungsinstrument ist, dass sie sehr langsam sind und/oder die Qualität der Aufnahme nicht zufriedenstellend ist.

Der Erfindung liegt daher die Aufgabe zugrunde, eine Anordnung zur Beobachtung eines Himmelskörpers bereitzustellen, die diese Nachteile überwindet und außerdem einfach herstellbar und bedienbar ist sowie eine kompakte Bauform aufweist.

Der Erfindung liegt ferner die Aufgabe zugrunde, ein Verfahren zum Bewegen eines Himmelskörperbildes gegenüber einem Beobachtungsinstrument bereitzustellen, das die Nachteile der aus dem Stand der Technik bekannten Verfahren überwindet und einfach durchführbar ist.

Die Aufgabe wird erfindungsgemäß gelöst durch eine Anordnung zur Beobachtung eines Himmelskörpers mit den Merkmalen des Patentanspruchs 1 sowie ein Verfahren zum Bewegen eines Himmelskörperbildes nach einem der Ansprüche 13 bis 15.

Vorteilhafte Ausgestaltungen und Weiterbildungen der Erfindung sind in den abhängigen Ansprüchen angegeben.

Eine erfindungsgemäße Anordnung zur Beobachtung eines Himmelskörpers umfasst ein Beobachtungsinstrument mit einer Eingangsöffnung zum Einlass zumindest eines Teils eines Himmelskörperbildes, einer Bilderzeugungsvorrichtung zur Erzeugung des zumindest teilweise durch die Eingangsöffnung fallenden Himmelskörperbildes, einem Spektrographen zur Zerlegung von durch die Eingangsöffnung einfallendem Licht in Spektrallinien und mindestens einem elektronischen Bildsensor zur Detektion mindestens einer der Spektrallinien.

Vorzugsweise ist die Eingangsöffnung in einem flächigen Element angeordnet, wobei das flächige Element und die Eingangsöffnung in einer Eingangsebene liegen. Bei der Bilderzeugungsvorrichtung handelt es sich vorzugsweise um ein optisches Element mit einem Brennpunkt. Die Bilderzeugungsvorrichtung ist dabei vorzugsweise so angeordnet, dass der Brennpunkt auf der Eingangsebene angeordnet ist. Im einfachsten Fall kann die Bilderzeugungsvorrichtung durch eine Linse gebildet werden. Vorzugsweise wird die Bilderzeugungsvorrichtung durch ein Teleskop gebildet. Bei Ausrichtung des Beobachtungsinstruments auf einen Himmelskörper kann damit ein Bild des Himmelskörpers auf der Eingangsebene erzeugt werden. Ist das Himmelskörperbild zumindest teilweise auf der Eingangsöffnung angeordnet, kann dieser Teil des Himmelskörperbildes durch die Eingangsöffnung hindurchfallen.

Die Eingangsöffnung ist vorzugsweise als Eingangsspalt ausgebildet. Besonders bevorzugt ist der Eingangsspalt so schmal ausgebildet, dass nur ein Teil des Himmelskörperbildes durch ihn hindurchfallen kann.

Der durch die Eingangsöffnung hindurchfallende Teil des Himmelkörperbildes kann von dem Spektrographen in seine Spektrallinien zerlegt werden. Dafür kann der Spektrograph insbesondere ein Beugungsgitter aufweisen. Indem von dem elektronischen Bildsensor mindestens eine der Spektrallinien detektiert wird, kann eine monochrome Aufnahme des durch die Eingangsöffnung fallenden Teils des Himmelskörperbildes erstellt werden. Durch die Verwendung eines elektronischen Bildsensors kann dabei die aufzunehmende Spektrallinie auf einfache Weise elektronisch ausgewählt und weiterverarbeitet werden.

Das Beobachtungsinstrument kann durch einen Spektroheliographen gebildet und damit zur Beobachtung der Sonne ausgebildet sein.

Darüber hinaus umfasst die erfindungsgemäße Anordnung eine Ausgleichsvorrichtung mit mindestens einer Ausgleichsachse zum Ausgleich einer durch die Erdrotation hervorgerufenen Relativbewegung zwischen dem Himmelskörperbild und dem Beobachtungsinstrument. Dadurch ist eine Beobachtung des Himmelskörpers unabhängig von der Erdrotation möglich.

Außerdem umfasst die erfindungsgemäße Anordnung mindestens eine Scanachse zur Erzeugung einer Relativbewegung zwischen dem Himmelskörperbild und dem Beobachtungsinstrument. Damit kann das Himmelskörperbild unabhängig von der Erdrotation über die Eingangsöffnung hinwegbewegt werden. Damit kann die Relativbewegung zwischen dem Himmelskörperbild und dem Beobachtungsinstrument beliebig beschleunigt oder verlangsamt werden. Insbesondere, wenn die Eingangsöffnung derart ausgebildet ist, dass nur ein Teil des Himmelskörperbildes durch die Eingangsöffnung fällt, kann so aus einzelnen Teilaufnahmen eine Gesamtaufnahme des Himmelskörperbildes erstellt werden. Vorzugsweise ist die Ausgleichsvorrichtung und/oder mindestens eine der mindestens einen Scanachse in dem oder, vorzugsweise unmittelbar, an dem Beobachtungsinstrument angeordnet. Dadurch kann die Anordnung besonders kompakt ausgebildet sein. Bevorzugt ist das Beobachtungsinstrument, besonders bevorzugt vollständig, in einem Instrumentengehäuse angeordnet. So kann der Transport zum und die Installation am Einsatzort des Beobachtungsinstruments vereinfacht werden. Wenn die Ausgleichsvorrichtung und/oder die mindestens eine Scanachse in dem Beobachtungsinstrument angeordnet ist, ist die Ausgleichsvorrichtung und/oder die mindestens eine Scanachse vorzugsweise innerhalb des Instrumentengehäuses angeordnet. Alternativ kann die Ausgleichsvorrichtung und/oder die Scanachse außerhalb des Beobachtungsinstruments angeordnet sein.

In einer Ausführungsform der Erfindung ist das Beobachtungsinstrument drehbar um die mindestens eine Ausgleichsachse und/oder die mindestens eine Scanachse angeordnet. Durch die drehbare Anordnung des Beobachtungsinstruments um die mindestens eine Ausgleichsachse kann die durch die Erdrotation hervorgerufenen Relativbewegung zwischen dem Himmelskörperbild und dem Beobachtungsinstrument durch eine Bewegung des Beobachtungsinstruments um die mindestens eine Ausgleichsachse ausgeglichen werden. Durch die drehbare Anordnung des Beobachtungsinstruments um die mindestens eine Scanachse kann eine von der Erdrotation unabhängige Relativbewegung zwischen dem Himmelskörperbild und dem Beobachtungsinstrument durch eine Bewegung des Beobachtungsinstruments um die mindestens eine Scanachse erzeugt werden.

Die Ausgleichsvorrichtung kann mindestens ein Reflexionselement umfassen, das drehbar um die mindestens eine Ausgleichsachse und/oder die mindestens eine Scanachse angeordnet ist. Mittels des mindestens einen Reflexionselements kann das von dem Himmelskörper ausgesendete Licht auf das Beobachtungsinstrument gelenkt werden. Durch die drehbare Anordnung des mindestens einen Reflexionselements um die mindestens eine Ausgleichsachse kann die durch die Erdrotation hervorgerufenen Relativbewegung zwischen dem Himmelskörperbild und dem Beobachtungsinstrument durch eine Bewegung des Reflexionselements um die mindestens eine Ausgleichsachse ausgeglichen werden. Durch die drehbare Anordnung des mindestens einen Reflexionselements um die mindestens eine Scanachse kann eine von der Erdrotation unabhängige Relativbewegung zwischen dem Himmelskörperbild und dem Beobachtungsinstrument durch eine Bewegung des Beobachtungsinstruments um die mindestens eine Scanachse erzeugt werden. Das mindestens Reflexionselement kann beispielsweise einen Spiegel umfassen. Die Ausgleichsvorrichtung kann insbesondere als Zölostat oder Heliostat ausgebildet sein.

Bevorzugt umfasst die Ausgleichsvorrichtung eine Montierung mit mindestens einer Montierungsachse, wobei die mindestens eine Ausgleichsachse durch mindestens eine der mindestens einen Montierungsachse gebildet ist. Als Montierung wird hier und im Folgenden eine stativähnliche Vorrichtung bezeichnet, die zum Tragen des Beobachtungsinstruments beziehungsweise des Reflexionselements geeignet ist. Sofern das Beobachtungsinstrument drehbar um die mindestens eine Ausgleichsachse angeordnet ist, ist das Beobachtungsinstrument vorzugsweise auf der Montierung angeordnet. Sofern das Reflexionselement drehbar um die mindestens eine Ausgleichsachse angeordnet ist, ist das Reflexionselement vorzugsweise auf der Montierung angeordnet.

In einer Ausführungsform der Erfindung ist die Montierung als parallaktische Montierung ausgebildet, wobei die mindestens eine Montierungsachse eine Deklinationsachse und eine Rektaszensionsachse umfasst, und wobei die mindestens eine Ausgleichsachse durch die Rektaszensionsachse gebildet ist. Dies hat den Vorteil, dass zum Ausgleich der durch die Erdrotation hervorgerufenen Relativbewegung zwischen dem Himmelskörperbild und dem Beobachtungsinstrument nur eine Bewegung um genau eine Ausgleichsachse, nämlich die Rektaszensionsachse, erforderlich ist. Dadurch kann der Aufbau und die Bedienung der Anordnung vereinfacht werden.

Die mindestens eine Scanachse kann durch die Deklinationsachse und/oder die Rektaszensionsachse gebildet sein. Dadurch kann die Funktion der mindestens einen Scanachse in die an der Montierung vorhandenen Achsen integriert werden. Sofern die mindestens eine Scanachse die Rektaszensionsachse umfasst, kann die Rektaszensionsachse gleichzeitig als Ausgleichsachse und Scanachse ausgebildet sein. Die Geschwindigkeit der Ausgleichsbewegung um die Rektaszensionsachse kann dann um die Geschwindigkeit der Scanbewegung um die Rektaszensionsachse korrigiert werden. Inwiefern die mindestens eine Scanachse durch die Deklinationsachse und/oder die Rektaszensionsachse gebildet ist, richtet sich vorzugsweise insbesondere nach der Ausrichtung des Eingangsspalts. Vorzugsweise wird die Scanbewegung derart ausgeführt, dass das Himmelskörperbild quer über den Eingangsspalt geführt wird. Ist der Eingangsspalt beispielsweise orthogonal zur Rektaszension angeordnet, erfolgt die Scanbewegung vorzugsweise nur um die Rektaszensionsachse, sodass die Scanachse nur durch die Rektaszensionsachse gebildet ist. Ist der Eingangsspalt beispielsweise orthogonal zur Deklination angeordnet, erfolgt die Scanbewegung vorzugsweise nur um die Deklinationsachse, sodass Scanachse nur durch die Deklinationsachse gebildet ist. Entspricht die Ausrichtung des Eingangsspalts keiner dieser beiden Beispiele, findet vorzugsweise eine entsprechend kombinierte Bewegung um die Deklinationsachse und die Rektaszensionsachse statt, sodass die Scanachse durch die Deklinationsachse und/oder die Rektaszensionsachse gebildet ist.

In einer weiteren Ausführungsform der Erfindung ist die Montierung als azimutale Montierung ausgebildet, wobei die mindestens eine Montierungsachse eine Elevationsachse und eine Azimutachse umfasst, und wobei die mindestens eine Ausgleichsachse durch die Elevationsachse und die Azimutachse gebildet ist. Mit einer derartigen Ausbildung der Montierung kann ein besonders einfacher Aufbau der Montierung realisiert werden. Mit der Elevationsachse und der Azimutachse weist eine derartige Montierung typischerweise zwei Ausgleichsachsen auf.

Die mindestens eine Scanachse kann durch die Elevationsachse und/oder die Azimutachse gebildet sein. Inwiefern die die Elevationsachse und/oder die Azimutachse als Scanachse ausgebildet sind, richtet sich vorzugsweise den vorstehenden Ausführungen entsprechend insbesondere nach der Ausrichtung des Eingangsspalts. Sofern die mindestens eine Scanachse die Elevationsachse umfasst, kann die Elevationsachse gleichzeitig als Ausgleichsachse und Scanachse ausgebildet sein. Sofern die mindestens eine Scanachse die Azimutachse umfasst, kann die Azimutachse gleichzeitig als Ausgleichsachse und Scanachse ausgebildet sein.

In einer weiteren Ausführungsform der Erfindung ist die mindestens eine Scanachse durch mindestens eine von der mindestens einen Montierungsachse verschiedene Zusatzachse gebildet. Dadurch kann die Scanachse gezielt auf die Anforderungen der Scanbewegung abgestimmt werden. So kann die Scanbewegung genauer und entkoppelter von äußeren Einflüssen durchgeführt werden. Dadurch kann insbesondere die Qualität der Aufnahme des Himmelskörperbildes verbessert werden. Das Beobachtungsinstrument oder das mindestens eine Reflexionselement können drehbar um die mindestens eine Zusatzachse gegenüber der Montierung gelagert sein. Die Drehung um die mindestens eine Zusatzachse kann mittels eines zusätzlichen Aktors erfolgen, der eine höhere Präzision als die mindestens eine Montierungsachse aufweisen kann.

Vorzugsweise ist die mindestens eine Scanachse mit dem mindestens einen elektronischen Bildsensor korreliert. Die mittels des Bildsensors angefertigten Aufnahmen setzen sich in der Regel aus mehreren Einzelaufnahmen der jeweils durch die Eingangsöffnung fallenden Teile des Himmelskörperbilds zusammen. Durch die Korrelation der mindestens einen Scanachse mit dem mindestens einen Bildsensor können die Funktion des mindestens einen Bildsensors und Bewegung um die mindestens eine Scanachse aufeinander abgestimmt werden. Insbesondere im Hinblick auf die Frequenz, in der der mindestens eine Bildsensor die Einzelaufnahmen anfertigt, und die Reihenfolge, in der die Einzelaufnehmen zu einer Gesamtaufnahme des Himmelskörperbildes zusammengesetzt werden, ist die Korrelation vorteilhaft. In einem einfachen Fall kann die Korrelation rein zeitlich ausgebildet sein. Dabei sind dem mindestens einen elektronischen Bildsensor der Startzeitpunkt und/oder die Geschwindigkeit der Bewegung um die mindestens eine Scanachse bekannt. Die Einzelaufnahmen können insbesondere anhand dieser Parameter anschließend von einem Rechner zusammengesetzt werden. Eine elektronische Kopplung der Bewegung um die mindestens eine Scanachse und dem mindestens einen elektronischen Bildsensor ist dafür nicht erforderlich. Vorzugsweise sind die mindestens eine Scanachse und der mindestens eine elektronische Bildsensor elektronisch miteinander gekoppelt, besonders bevorzugt mittels einer elektronischen Datenverarbeitungseinheit.

In einer bevorzugten Ausführungsform der Erfindung ist der mindestens eine elektronische Bildsensor bezüglich des Beobachtungsinstruments unverschiebbar angeordnet. Dadurch kann das Beobachtungsinstrument konstruktiv einfacher und kostengünstiger hergestellt werden. Der mindestens eine elektronische Bildsensor weist vorzugsweise eine erste Dimension und eine zweite Dimension auf. Der mindestens eine Bildsensor kann derart angeordnet sein, dass die mindestens eine von dem Spektrographen ausgegebene Spektrallinie entlang der ersten Dimension ausgerichtet ist. Bei mehreren von dem Spektrographen ausgegebenen Spektrallinien können die Spektrallinien in Richtung der zweiten Dimension parallel zueinander angeordnet sein. Die erste Dimension einer detektierten Spektrallinie kann damit eine Ortsinformation über den detektierten Inhalt enthalten. Die zweite Dimension einer detektierten Spektrallinie kann eine Farbinformation über den detektierten Inhalt enthalten. Die Auswahl einer der mindestens einen zu detektierenden, an beliebiger Stelle auf den mindestens einen Bildsensor fallenden Spektrallinie und deren Anordnung in der Gesamtaufnahme des Himmelskörperbildes können elektronisch erfolgen.

Der mindestens eine elektronische Bildsensor kann als Zeilensensor ausgebildet sein. Dadurch kann der von dem mindestens einen elektronischen Bildsensor benötigte Bauraum verkleinert und das Beobachtungsinstrument günstiger hergestellt werden. Durch die Verwendung eines Zeilensensors kann außerdem der Rechenaufwand bei der Erstellung der Aufnahme des Himmelskörperbildes reduziert werden. Der Zeilensensor ist vorzugsweise parallel zu der mindestens einen von dem Spektrographen ausgegebenen Spektrallinie derart angeordnet, dass die mindestens eine zu detektierende Spektrallinie auf den Zeilensensor fällt. Der Zeilensensor ist damit vorzugsweise entlang der ersten Dimension angeordnet. Die Auswahl der mindestens einen zu detektierenden Spektrallinie kann somit durch die Anordnung des Zeilensensors entlang der zweiten Dimension getroffen werden. Das zusätzliche Erfassen der Farbinformation ist damit zur Erzeugung einer monochromen Aufnahme nicht nötig. Ein Zeilensensor ist für die Erstellung eines monochromatischen Himmelskörperbildes somit ausreichend.

Vorzugsweise weist zumindest eine der folgenden Komponenten eine elektronische Schnittstelle auf:
- die Bilderzeugungsvorrichtung,
- der Spektrograph,
- der mindestens eine elektronische Bildsensor,
- die Ausgleichsvorrichtung,
- die mindestens eine Scanachse.

Die elektronische Schnittstelle des Spektrographen ist vorzugsweise an dem Beugungsgitter angeordnet. Das Beugungsgitter kann, insbesondere zur Einstellung der Wellenlänge, verschiebbar, insbesondere verdrehbar, gegenüber dem Eingangsspalt bzw. dem Kollimationsobjektiv angeordnet sein. Vorzugsweise kann damit insbesondere die Wellenlänge des Beugungsgitters mittels der elektronischen Schnittstelle des Spektrographen eingestellt werden.

Die Fokussierung des Beobachtungsinstruments kann durch die Veränderung der Anordnung, insbesondere des Abstands, der jeweiligen Komponenten zueinander bei mindestens einem der folgenden Komponentenpaare erfolgen:
- Bilderzeugungsvorrichtung - Eingangsspalt,
- Kollimationsobjektiv - Eingangsspalt,
- Kameraobjektiv - Bildsensor.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt, Kollimationsobjektiv, Kameraobjektiv.

Vorzugsweise ist die elektronische Schnittstelle als ASCOM-Schnittstelle ausgebildet. Bei der ASCOM-Schnittstelle handelt es sich um eine standardisierte Softwareschnittstelle für astronomische Ausrüstung. Dadurch kann die elektronische Kommunikation und zwischen den einzelnen Komponenten über eine standardisierte Softwareschnittstelle erfolgen und damit erleichtert werden. Auch die Bedienung der Anordnung mithilfe eines Zentralrechners, der besonders bevorzugt ebenfalls eine ASCOM-Schnittstelle aufweist, wird dadurch erheblich vereinfacht. Besonders vorteilhaft ist es dabei, wenn der Spektrograph eine ASCOM-Schnittstelle aufweist.

Ein erfindungsgemäßes Verfahren zum Bewegen eines Himmelskörperbildes gegenüber einem Beobachtungsinstrument unter Verwendung einer vorstehend beschriebenen Anordnung, bei der das Beobachtungsinstrument drehbar um die mindestens eine Ausgleichsachse und die mindestens eine Scanachse angeordnet ist, umfasst die folgenden Schritte:
- Erzeugen eines in oder auf dem Beobachtungsinstrument angeordneten Himmelskörperbildes mittels der Bilderzeugungsvorrichtung,
- Ausgleichen der durch die Erdrotation hervorgerufenen Relativbewegung zwischen dem Himmelskörperbild und dem Beobachtungsinstrument mittels der Ausgleichsvorrichtung durch Drehen des Beobachtungsinstruments um die mindestens eine Ausgleichsachse,
- Erzeugung einer Relativbewegung zwischen dem Himmelskörperbild und dem Beobachtungsinstrument durch Drehen des Beobachtungsinstruments um die mindestens eine Scanachse.

Diese Schritte können, wie auch die Schritte der nachfolgend beschriebenen Verfahren, zumindest teilweise auch gleichzeitig durchgeführt werden.

Das Himmelskörperbild wird vorzugsweise auf der Eingangsebene des Beobachtungsinstruments erzeugt. Sofern die mindestens eine Ausgleichsachse und die mindestens eine Scanachse mindestens eine gemeinsame Achse umfassen, kann, vorzugsweise wie vorstehend beschrieben, auf der mindestens einen gemeinsamen Achse die Bewegung um die mindestens eine Ausgleichsachse und die Bewegung um die mindestens eine Scanachse überlagert werden.

Ein weiteres erfindungsgemäßes Verfahren zum Bewegen eines Himmelskörperbildes gegenüber einem Beobachtungsinstrument unter Verwendung einer vorstehend beschriebenen Anordnung, die ein Reflexionselement umfasst, und bei der das mindestens eine Reflexionselement drehbar um die mindestens eine Ausgleichsachse und die mindestens eine Scanachse angeordnet ist, umfasst die folgenden Schritte:
- Erzeugen eines in oder auf dem Beobachtungsinstrument angeordneten Himmelskörperbildes mittels der Bilderzeugungsvorrichtung,
- Ausgleichen der durch die Erdrotation hervorgerufenen Relativbewegung zwischen dem Himmelskörperbild und dem Beobachtungsinstrument mittels der Ausgleichsvorrichtung durch Drehen des mindestens einen Reflexionselements um die mindestens eine Ausgleichsachse,
- Erzeugung einer Relativbewegung zwischen dem Himmelskörperbild und dem Beobachtungsinstrument durch Drehen des mindestens einen Reflexionselements um die mindestens eine Scanachse.

Dabei umfassen die mindestens eine Ausgleichachse und die mindestens eine Scanachse typischerweise derart voneinander getrennt ausgebildet, dass sie keine gemeinsame Achse umfassen.

Ein weitere erfindungsgemäßes Verfahren zum Bewegen eines Himmelskörperbildes gegenüber einem Beobachtungsinstrument unter Verwendung einer vorstehend beschriebenen Anordnung, die ein Reflexionselement umfasst, und bei der das mindestens eine Reflexionselement drehbar um die mindestens eine Ausgleichsachse und das Beobachtungsinstrument drehbar um die mindestens eine Scanachse angeordnet ist, umfasst die folgenden Schritte:
- Erzeugen eines in oder auf dem Beobachtungsinstrument angeordneten Himmelskörperbildes mittels der Bilderzeugungsvorrichtung,
- Ausgleichen der durch die Erdrotation hervorgerufenen Relativbewegung zwischen dem Himmelskörperbild und dem Beobachtungsinstrument mittels der Ausgleichsvorrichtung durch Drehen des mindestens einen Reflexionselements um die mindestens eine Ausgleichsachse,
- Erzeugung einer Relativbewegung zwischen dem Himmelskörperbild und dem Beobachtungsinstrument durch Drehen des Beobachtungsinstruments um die mindestens eine Scanachse.

Dabei ist die Ausgleichsvorrichtung vorzugsweise durch eine Montierung gebildet und die mindestens eine Scanachse durch mindestens eine von der mindestens einen Montierungsachse verschiedene Zusatzachse gebildet.

In einer Weiterbildung der vorstehend erläuterten Verfahren wird durch die Eingangsöffnung einfallendes Licht mittels des Spektrographen in Spektrallinien zerlegt und mindestens eine der Spektrallinien wird von dem elektronischen Bildsensor detektiert. Dabei wirkt vorzugsweise der elektronische Bildsensor bei der Detektion der mindestens einen Spektrallinie elektronisch mit der mindestens einen Scanachse zusammen. Insbesondere können Detektionsparameter wie beispielsweise eine Detektionsfrequenz oder eine Belichtungszeit in Abhängigkeit der Bewegungsgeschwindigkeit um die mindestens eine Scanachse bestimmt werden. Durch das elektronische Zusammenwirken des Bildsensors mit der mindestens einen Scanachse kann auch die Reihenfolge bzw. die jeweilige Position der Einzelaufnahmen in der Gesamtaufnahme bestimmt werden. Die Gesamtaufnahme kann so mittels einer elektronischen Datenverarbeitungsanlage aus den Einzelaufnahmen erzeugt werden. So können monochromatische Gesamtaufnahmen des Himmelskörpers erzeugt werden, ohne dass eine mechanische Bewegung des Bildsensors relativ zu dem Beobachtungsgerät erforderlich ist.

In einer möglichen Ausführungsform der Erfindung werden verschiedene Spektrallinien des durch die Eingangsöffnung fallenden Teils des Himmelskörperbildes detektiert. So können gleichzeitig unterschiedliche monochrome Aufnahmen des beobachteten Himmelskörperbildes erzeugt werden.

Ausführungsbeispiele der Erfindung werden anhand der nachfolgenden Figuren erläutert. Es zeigt:
- Figur 1a: eine schematische Darstellung eines Beobachtungsinstruments,
- Figur 1b: eine schematische Darstellung eines Beobachtungsinstruments mit einem Zeilensensor,
- Figur 2: eine schematische Darstellung eines ersten Ausführungsbeispiels einer beanspruchten Anordnung, wobei das Beobachtungsinstrument auf einer parallaktischen Montierung angeordnet ist,
- Figur 3: eine schematische Darstellung eines zweiten Ausführungsbeispiels einer beanspruchten Anordnung, wobei das Beobachtungsinstrument auf einer azimutalen Montierung angeordnet ist,
- Figur 4: eine schematische Darstellung eines dritten Ausführungsbeispiels einer beanspruchten Anordnung, wobei ein Reflexionselement auf einer parallaktischen Montierung angeordnet ist,
- Figur 5: eine schematische Darstellung eines vierten Ausführungsbeispiels einer beanspruchten Anordnung, wobei das Reflexionselement auf einer azimutalen Montierung angeordnet ist,
- Figur 6: eine schematische Darstellung eines fünften Ausführungsbeispiels einer beanspruchten Anordnung, wobei das Reflexionselement auf einer azimutalen Montierung und das Beobachtungsinstrument um eine Zusatzachse drehbar angeordnet ist,
- Figur 7: eine schematische Darstellung eines fünften Ausführungsbeispiels einer beanspruchten Anordnung, wobei das das Beobachtungsinstrument auf einer parallaktischen Montierung und um eine Zusatzachse drehbar angeordnet ist.

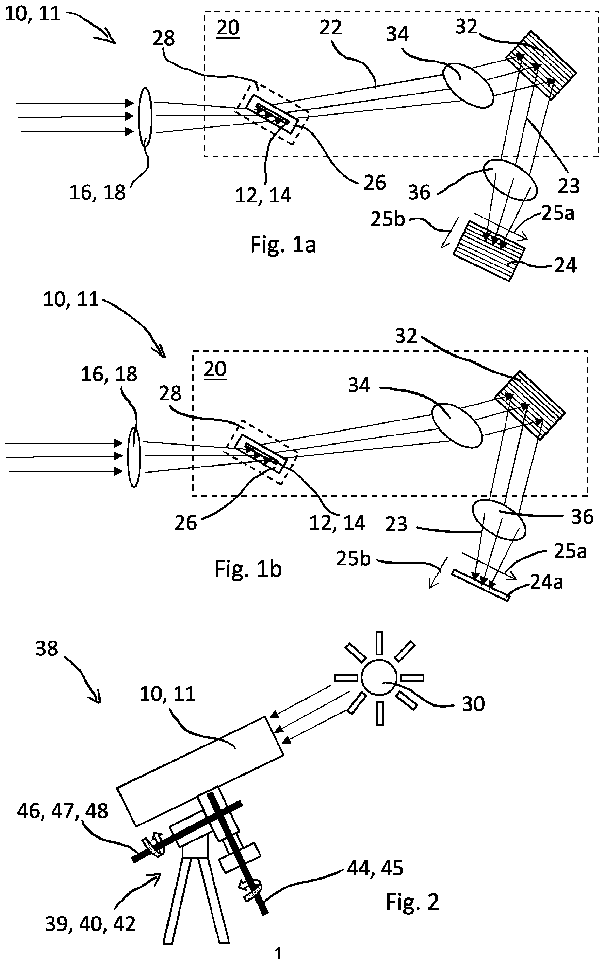

Die Figuren 1a bis 7 zeigen verschiedene Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Fig. 1a zeigt eine schematische Darstellung eines als Spektroheliographen 10 ausgebildeten Beobachtungsinstruments 11 mit einer als Eingangsspalt 12 ausgebildeten Eingangsöffnung 14, einer als Teleskop 16 ausgebildeten Bilderzeugungsvorrichtung 18 zur Erzeugung eines zumindest teilweise durch den Eingangsspalt 12 fallenden Himmelskörperbildes, nämlich eines Sonnenbildes, einem Spektrographen 20 zur Zerlegung von durch den Eingangsspalt einfallendem Licht 22 in Spektrallinien 23 und einem elektronischen Bildsensor 24 zur Detektion mindestens einer der Spektrallinien.

Der Eingangsspalt 12 ist in einem flächigen Element 26 angeordnet, wobei das flächige Element 26 und der Eingangsspalt 12 in einer Eingangsebene 28 liegen. Bei Ausrichtung des Beobachtungsinstruments 11 auf einen Himmelskörper wie die Sonne 30 (Fig. 2 bis 7) kann damit ein Bild des Himmelskörpers auf der Eingangsebene 28 erzeugt werden. Der Eingangsspalt 12 ist dabei so schmal ausgebildet, dass nur ein Teil des Sonnenbildes durch ihn hindurchfallen kann.

Der durch den Eingangsspalt hindurchfallende Teil des Himmelkörperbildes kann von dem Spektrographen 20 in seine Spektrallinien 23 zerlegt werden. Dafür weist der Spektrograph 20 ein Beugungsgitter 32 auf. Der Spektrograph umfasst ferner ein Kollimationsobjektiv 34. Wie aus Fig. 1a außerdem hervorgeht, ist auch der Eingangsspalt 12 in dem gezeigten Ausführungsbeispiel als Bestandteil des Spektrographen 20 ausgebildet.

Die von dem Beugungsgitter 32 reflektierten Spektrallinien 23 fallen durch ein Kameraobjektiv 36 auf den elektronischen Bildsensor 24. Indem von dem elektronischen Bildsensor 24 mindestens eine der Spektrallinien 23 detektiert wird, kann eine monochrome Aufnahme des durch den Eingangsspalt 12 fallenden Teils des Sonnenbildes erstellt werden.

In dem in Fig. 1a gezeigten Ausführungsbeispiel ist der elektronische Bildsensor 24 bezüglich des Spektroheliographen 10 unverschiebbar angeordnet. Der in Fig. 1a dargestellte elektronische Bildsensor 24 weist eine erste Dimension 25a und eine zweite Dimension 25b auf. Der Bildsensor 24 ist derart angeordnet, dass die mindestens eine von dem Spektrographen 20 ausgegebene Spektrallinie 23 entlang der ersten Dimension 25a ausgerichtet ist. Bei mehreren von dem Spektrographen 20 ausgegebenen Spektrallinien 23 können die Spektrallinien 23 in Richtung der zweiten Dimension 25b parallel zueinander angeordnet sein. Die erste Dimension 25a einer detektierten Spektrallinie 23 kann damit eine Ortsinformation über den detektierten Inhalt enthalten. Die zweite Dimension 25b einer detektierten Spektrallinie 23 kann eine Farbinformation über den detektierten Inhalt enthalten.

Die in Fig. 1b gezeigte Darstellung unterscheidet sich von der in Fig. 1a gezeigten darin, dass der elektronische Bildsensor 24 als Zeilensensor 24a ausgebildet ist, wodurch sich der von dem elektronischen Bildsensor 24 benötigte Bauraum verkleinert. Der Zeilensensor 24a ist vorzugsweise parallel zu der mindestens einen von dem Spektrographen 10 ausgegebenen Spektrallinie 23 derart angeordnet, dass die zu detektierende Spektrallinie 23 auf den Zeilensensor 24b fällt. Der Zeilensensor 24a ist damit entlang der ersten Dimension 25a angeordnet. Die Auswahl der zu detektierenden Spektrallinie 23 kann somit durch die Anordnung des Zeilensensors 24a entlang der zweiten Dimension 25b getroffen werden.

In den Fig. 2 bis 7 ist gezeigt, dass eine Anordnung 38 zur Beobachtung eines Himmelskörpers neben dem Beobachtungsinstrument 11, das in Fig. 1a schematisch dargestellt ist, eine als Montierung 39 ausgebildete Ausgleichsvorrichtung 40 zum Ausgleich einer durch die Erdrotation hervorgerufenen Relativbewegung zwischen dem Himmelskörperbild und dem Beobachtungsinstrument 11 umfasst.

Bei der in Fig. 2 gezeigte Anordnung ist der Spektroheliograph 10 auf einer parallaktischen Montierung 42 mit einer Deklinationsachse 44 und einer Rektaszensionsachse 46 angeordnet. Durch eine Bewegung des Spektroheliographen 10 um die Rektaszensionsachse 46 kann die durch die Erdrotation hervorgerufene Relativbewegung zwischen dem Spektroheliographen 10 und dem Sonnenbild ausgeglichen werden. Die Rektaszensionsachse 46 bildet dementsprechend eine Ausgleichsachse 48.

Damit das Sonnenbild unabhängig von der Erdrotation über den Eingangsspalt 12 hinwegbewegt werden kann, umfasst die Anordnung 38 ferner mindestens eine Scanachse. Vorzugsweise wird diese Scanbewegung derart ausgeführt, dass das Sonnenbild quer über den Eingangsspalt 12 geführt wird. Je nach Ausrichtung des Eingangsspalts 12 wird die mindestens Scanachse dementsprechend durch die Deklinationsachse 44 und/oder die Rektaszensionsachse 46 gebildet. So kann die mindestens eine Scanachse die Rektaszensionsachse 46 als erste Scanachse 47 und/oder die Deklinationsachse 44 als zweite Scanachse 45 umfassen. Sofern die mindestens eine Scanachse die Rektaszensionsachse 46 umfasst, kann die Rektaszensionsachse 46 gleichzeitig als Ausgleichsachse 48 und erste Scanachse 47 ausgebildet sein. Die Geschwindigkeit der Ausgleichsbewegung um die Rektaszensionsachse 46 kann dann um die Geschwindigkeit der Scanbewegung um die Rektaszensionsachse 46 korrigiert werden.

Durch die Anordnung des Spektroheliographen 10 auf der Montierung 39 ist in dem in Fig. 2 gezeigten Ausführungsbeispiel das Beobachtungsinstrument 11 drehbar um die Ausgleichsachse 48 und um die durch die Deklinationsachse 44 und/oder die Rektaszensionsachse 46 gebildete mindestens eine Scanachse angeordnet.

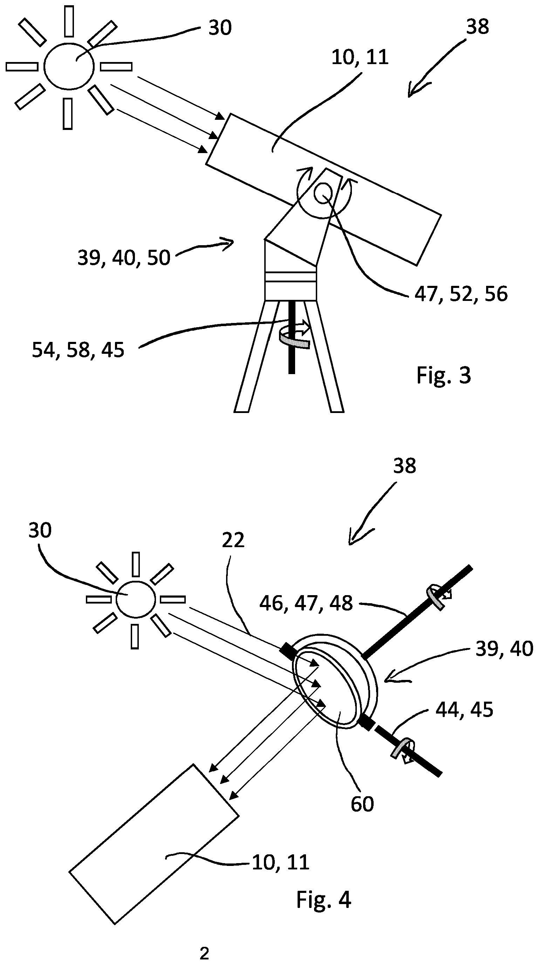

Das in Fig. 3 gezeigte Ausführungsbeispiel unterscheidet sich von dem in Fig. 2 gezeigten darin, dass die Montierung 39 als azimutale Montierung 50 mit einer Elevationsachse 52 und einer Azimutachse 54 ausgebildet ist. Zum Ausgleich der durch die Erdrotation hervorgerufene Relativbewegung zwischen dem Sonnenbild und dem Spektroheliographen 10 wird der Spektroheliograph um die Elevationsachse 52 und um die Azimutachse 54 bewegt, sodass die azimutale Montierung 50 mit der Elevationsachse 52 eine erste Ausgleichsachse 56 und mit der Azimutachse 54 eine zweite Ausgleichsachse 58 aufweist.

Die mindestens eine Scanachse kann die Elevationsachse 52 als erste Scanachse 47 und/oder die Azimutachse 54 als zweite Scanachse 45 umfassen. Inwiefern die die Elevationsachse 52 und/oder die Azimutachse 54 als Scanachse ausgebildet sind, richtet sich dem vorstehenden Ausführungsbeispiel entsprechend insbesondere nach der Ausrichtung des Eingangsspalts 12. In der Regel wird eine Bewegung des Sonnenbildes quer zum Eingangsspalt 12 angestrebt. Sofern die mindestens eine Scanachse die Elevationsachse 52 umfasst, ist die Elevationsachse 52 gleichzeitig als erste Ausgleichsachse 56 und erste Scanachse 47 ausgebildet. Damit sind sowohl die erste Ausgleichsachse 56 als auch die erste Scanachse 47 unmittelbar an dem Beobachtungsinstrument 11 angeordnet. Sofern die mindestens eine Scanachse die Azimutachse 54 umfasst, ist die Azimutachse 54 gleichzeitig als zweite Ausgleichsachse 56 und zweite Scanachse 45 ausgebildet.

Die Ausgleichsvorrichtung 40 kann räumlich getrennt von dem Beobachtungsinstrument 11 angeordnet sein. Entsprechende Ausführungsbeispiele finden sich in den Fig. 4 bis 6. Bei diesen Ausführungsbeispielen umfasst die Ausgleichsvorrichtung 40 ein Reflexionselement 60. Mittels des Reflexionselements 60 kann das von der Sonne 30 ausgesendete Licht 22 auf den Spektroheliographen 10 gelenkt werden. Das Reflexionselement 60 ist auf der Montierung 39 angeordnet. Dadurch ist das Reflexionselement 60 in jedem der in Fig. 4 bis 6 gezeigten Ausführungsbeispiele um mindestens eine Ausgleichsachse drehbar angeordnet, sodass die durch die Erdrotation hervorgerufenen Relativbewegung zwischen dem Sonnenbild und dem Spektroheliographen 10 durch eine Bewegung des Reflexionselements 60 ausgeglichen werden kann. Insbesondere bei den in Fig. 4 bis 6 gezeigten Ausführungsbeispielen kann ein nicht dargestelltes Instrumentengehäuse des Beobachtungsinstruments 11 derart ausgebildet sein, dass die Ausgleichsvorrichtung 40 und/oder mindestens eine der mindestens einen Scanachse in dem Instrumentengehäuse angeordnet ist.

Bei dem in Fig. 4 gezeigten Ausführungsbeispiel ist die Montierung 39, auf der das Reflexionselement 60 angeordnet ist, als parallaktische Montierung 42 ausgebildet. Dementsprechend wird die Ausgleichsachse 48 durch die Rektaszensionsachse 46 gebildet. Die mindestens eine Scanachse kann insbesondere in Abhängigkeit von der Orientierung des Eingangsspalts 12, entsprechend dem Ausführungsbeispiel der Fig. 2, die Rektaszensionsachse 46 als erste Scanachse 47 und/oder die Deklinationsachse 44 als zweite Scanachse 45 umfassen. Der Spektroheliograph 10 ist in Fig. 4 unbeweglich angeordnet.

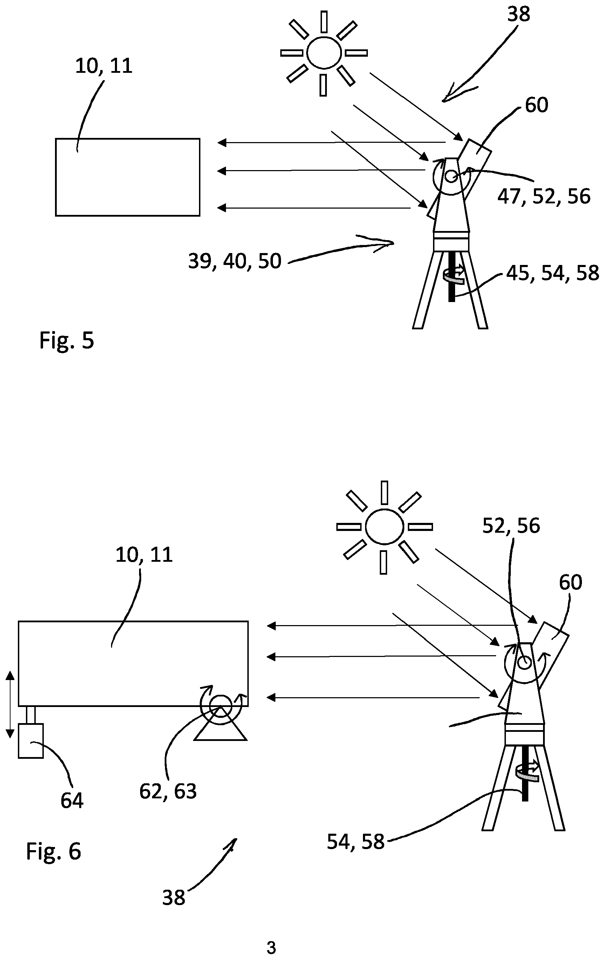

Das in Fig. 5 gezeigte Ausführungsbeispiel unterscheidet sich von dem der Fig. 4 dadurch, dass die Ausgleichsvorrichtung 40 als azimutale Montierung 50 ausgebildet ist. Entsprechend dem in Fig. 3 gezeigten Ausführungsbeispiel ist die erste Ausgleichsachse 56 durch die Elevationsachse 52 und die zweite Ausgleichsachse 58 durch die Azimutachse 54 gebildet. Die mindestens eine Scanachse kann, insbesondere in Abhängigkeit der Orientierung des Eingangsspalts 12, die Elevationsachse 52 als erste Scanachse 47 und/oder die Azimutachse 54 als zweite Scanachse 45 umfassen. Im Übrigen ist das in Fig. 5 dargestellte Ausführungsbeispiel im Wesentlichen identisch zu dem in Fig. 4 gezeigten ausgebildet.

Im Unterschied zu der in Fig. 5 dargestellten Anordnung 38, ist in dem in Fig. 6 gezeigten Ausführungsbeispiel die mindestens eine Scanachse durch eine von der Elevationsachse 52 und der Azimutachse 54 verschiedene Scanachse 63 in Form einer Zusatzachse 62 gebildet. Dabei ist der Spektroheliograph 10 drehbar um die Zusatzachse 62 angeordnet. Die Zusatzachse 62 und damit die Scanachse 63 ist unmittelbar an dem Beobachtungsinstrument 11 angeordnet. Die Drehung um die Zusatzachse 62 erfolgt mittels eines zusätzlichen Aktors 64, der typischerweise eine höhere Präzision als die Elevationsachse 52 und die Azimutachse 54 aufweist. Im Übrigen ist das in Fig. 6 dargestellte Ausführungsbeispiel im Wesentlichen identisch zu dem in Fig. 5 gezeigten ausgebildet.

Die Montierung 39 des in Fig. 6 gezeigten Ausführungsbeispiels kann anstelle der azimutalen Montierung 50 in entsprechender Weise durch die parallaktische Montierung 42 des in Fig. 4 dargestellten Ausführungsbeispiels ersetzt werden. In diesem Fall wird die Ausgleichsachse 48 durch die Rektaszensionsachse 46 gebildet.

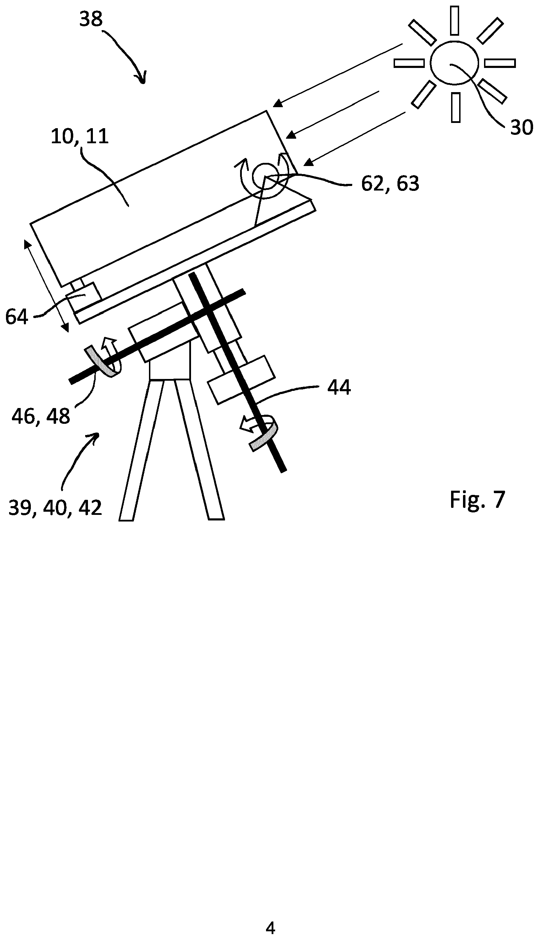

Wie das in Fig. 7 dargestellte Ausführungsbeispiel zeigt, kann der Spektroheliograph 10 gegenüber der Montierung 39 drehbar um die Zusatzachse 62 gelagert sein. Dabei ist die Montierung durch die parallaktische Montierung 42 gebildet, kann aber ebenso durch die azimutale Montierung 50 des in Fig. 3 gezeigten Ausführungsbeispiels gebildet sein. Auch bei dem in Fig. 7 gezeigten Ausführungsbeispiel, bei dem der Spektroheliograph 10 um die Zusatzachse 62 drehbar auf der Montierung 39 angeordnet ist, wird das für die Drehung um die Zusatzachse 62 erforderliche Drehmoment von dem zusätzlichen Aktor 64 bereitgestellt.

In den in Fig. 2 bis 7 dargestellten Ausführungsbeispielen ist jeweils die mindestens eine Scanachse mit dem elektronischen Bildsensor 24 korreliert. Durch die Korrelation der mindestens einen Scanachse mit dem Bildsensor 24 können die Funktion des Bildsensors 24 und Bewegung um die mindestens eine Scanachse aufeinander abgestimmt werden.

Darüber hinaus ist anzumerken, dass die einzelnen Bestandteile der in den Fig. 2 bis 7 gezeigten Anordnungen 38 unterschiedlich miteinander zu weiteren Ausführungsbeispielen der Anordnung 38 kombiniert werden können. Insbesondere kann beispielsweise das Reflexionselement 60 drehbar um die Zusatzachse 62 angeordnet und mittels des Aktors 64 bewegbar sein.

Bei jeder der in den Fig. 2, 3 und 7 gezeigten Anordnungen 38 ist der Spektroheliograph 10 drehbar um die jeweilige Ausgleichsachse 48, 56, 58 und die jeweilige Scanachse 45, 47, 63 angeordnet. Zum Bewegen des Sonnenbildes gegenüber dem Spektroheliographen 10 wird mittels des Teleskops 16 das Bild der Sonne 30, also das Sonnenbild, auf der Eingangsebene 28 des Spektroheliographen 10 erzeugt. Um dabei die durch die Erdrotation hervorgerufenen Relativbewegung zwischen dem Sonnenbild und dem Spektroheliographen 10 auszugleichen, wird der Spektroheliograph 10 mittels der Ausgleichsvorrichtung 40 um die mindestens eine Ausgleichsachse gedreht. In den in Fig. 2 und 7 gezeigten Ausführungsbeispielen erfolgt dementsprechend eine Drehung um die durch die Rektaszensionsachse 46 gebildete Ausgleichsachse 48. Im in Fig. 3 gezeigten Ausführungsbeispiel erfolgt dementsprechend eine Drehung um die als erste Ausgleichsachse 56 ausgebildete Elevationsachse 52 und die als zweite Ausgleichsachse 58 ausgebildete Azimutachse 54. Zum Scannen des Sonnenbildes wird gleichzeitig eine Relativbewegung zwischen dem Sonnenbild und dem Spektroheliographen 10 durch Drehen des Spektroheliographen 10 um die erste Scanachse 47 und/oder die zweite Scanachse 45 erzeugt.

Sofern die Ausgleichsachse 48 des in Fig. 2 gezeigten Ausführungsbeispiels oder eine der Ausgleichsachsen 56, 58 des in Fig. 3 gezeigten Ausführungsbeispiels mit einer der Scanachsen 45, 47 auf einer gemeinsamen Achse zusammenfällt, können auf der gemeinsamen Achse die Bewegung um die entsprechende Ausgleichsachse und die Bewegung um die entsprechende Scanachse überlagert werden.

Bei den in Fig. 4 u. 5 gezeigten Ausführungsbeispielen ist anstelle des Spektroheliographen 10 das Reflexionselement 60 drehbar um die jeweilige Ausgleichsachse 48, 56, 58 und die jeweilige Scanachse 45, 47, 63 angeordnet. Das Verfahren zum Bewegen des Sonnenbildes gegenüber dem Spektroheliographen 10 unterscheidet sich dadurch darin, dass das Ausgleichen der durch die Erdrotation hervorgerufenen Relativbewegung zwischen dem Sonnenbild und dem Spektroheliographen 10 mittels der Ausgleichsvorrichtung 40 durch Drehen des Reflexionselements 60 um die Ausgleichsachse 48 (Fig. 4), beziehungsweise um die erste Ausgleichsachse 56 und die zweite Ausgleichsachse 58 erfolgt. Zum Scannen des Sonnenbildes wird gleichzeitig eine Relativbewegung zwischen dem Sonnenbild und dem Spektroheliographen 10 durch Drehen des Reflexionselements 60 um die erste Scanachse 47 und/oder die zweite Scanachse 45 erzeugt. Im Übrigen ist das Verfahren identisch zu dem zuvor in Bezug auf die Ausführungsbeispiele der Fig. 2, 3 und 7 beschriebenen.

Bei dem in Fig. 6 gezeigten Ausführungsbeispiel ist im Unterschied zu dem in den Fig. 4 u. 5 gezeigten die Scanachse 63 durch die Zusatzachse 62 gebildet. Der Spektroheliograph 10 ist drehbar um die Zusatzachse 62 abgeordnet. Das Verfahren zum Bewegen des Sonnenbildes gegenüber dem Spektroheliographen 10 unterscheidet sich dadurch darin, dass die Relativbewegung zwischen dem Sonnenbild und dem Spektroheliographen 10 durch Drehen des Spektroheliographen 10 um die als Zusatzachse 62 ausgebildete Scanachse 63 erfolgt. Im Übrigen ist das Verfahren identisch zu dem zuvor in Bezug auf die Ausführungsbeispiele der Fig. 4 u. 5 beschriebenen.

Bei jedem der zuvor beschriebenen Ausführungsbeispiele kann zumindest eine der folgenden Komponenten eine elektronische Schnittstelle aufweisen:
- die Bilderzeugungsvorrichtung 18,
- der Spektrograph 20,
- der mindestens eine elektronische Bildsensor 24,
- die Ausgleichsvorrichtung 40,
- die mindestens eine Scanachse 45, 47, 63.

Die elektronische Schnittstelle des Spektrographen 20 ist vorzugsweise an dem Beugungsgitter 32 angeordnet. Das Beugungsgitter 32 kann, insbesondere zur Einstellung der Wellenlänge, verschiebbar, insbesondere verdrehbar, gegenüber dem Eingangsspalt 12 bzw. dem Kollimationsobjektiv 34 angeordnet sein. Vorzugsweise kann damit insbesondere die Wellenlänge des Beugungsgitters 32 mittels der elektronischen Schnittstelle des Spektrographen 20 eingestellt werden.

Die Fokussierung des Beobachtungsinstruments 11 kann durch die Veränderung der Anordnung, insbesondere des Abstands, der jeweiligen Komponenten zueinander bei mindestens einem der folgenden Komponentenpaare erfolgen:
- Bilderzeugungsvorrichtung 18 - Eingangsspalt 12,
- Kollimationsobjektiv 34 - Eingangsspalt 12,
- Kameraobjektiv 36 - Bildsensor 24.

Vorzugsweise ist die Fokussierung mittels der elektronischen Schnittstelle mindestens einer der entsprechenden Komponenten einstellbar. Insbesondere dafür kann auch mindestens eine der folgenden Komponenten die elektronische Schnittstelle aufweisen: Eingangsspalt 12, Kollimationsobjektiv 34, Kameraobjektiv 36. Vorzugsweise ist die elektronische Schnittstelle als ASCOM-Schnittstelle ausgebildet.

### Bezugszeichenliste

- 10: Spektroheliograph
- 11: Beobachtungsinstrument
- 12: Eingangsspalt
- 14: Eingangsöffnung
- 16: Teleskop
- 18: Bilderzeugungsvorrichtung
- 20: Spektrograph
- 22: Licht
- 23: Spektrallinie
- 24: Bildsensor
- 24a: Zeilensensor
- 25a: erste Dimension
- 25b: zweite Dimension
- 26: flächiges Element
- 28: Eingangsebene
- 30: Sonne
- 32: Beugungsgitter
- 34: Kollimationsobjektiv
- 36: Kameraobjektiv
- 38: Anordnung
- 39: Montierung
- 40: Ausgleichsvorrichtung
- 42: parallaktische Montierung
- 44: Deklinationsachse
- 45: zweite Scanachse
- 46: Rektaszensionsachse
- 47: erste Scanachse
- 48: Ausgleichsachse
- 50: azimutale Montierung
- 52: Elevationsachse
- 54: Azimutachse
- 56: erste Ausgleichsachse
- 58: zweite Ausgleichsachse
- 60: Reflexionselement
- 62: Zusatzachse
- 63: Scanachse
- 64: Aktor

## Patentansprüche

1. Anordnung (38) zur Beobachtung eines Himmelskörpers umfassend
• ein Beobachtungsinstrument (11) mit
oeiner Eingangsöffnung (14) zum Einlass zumindest eines Teils eines Himmelskörperbildes,
oeiner Bilderzeugungsvorrichtung (18) zur Erzeugung des zumindest teilweise durch die Eingangsöffnung (14) fallenden Himmelskörperbildes,
oeinem Spektrographen (20) zur Zerlegung von durch die Eingangsöffnung (14) einfallendem Licht in Spektrallinien (23),
omindestens einem elektronischen Bildsensor (24) zur Detektion mindestens einer der Spektrallinien (23),
• eine Ausgleichsvorrichtung (40) mit mindestens einer Ausgleichsachse (48, 56, 58) zum Ausgleich einer durch die Erdrotation hervorgerufenen Relativbewegung zwischen dem Himmelskörperbild und dem Beobachtungsinstrument (11),
• mindestens eine Scanachse (45, 47, 63) zur Erzeugung einer Relativbewegung zwischen dem Himmelskörperbild und dem Beobachtungsinstrument (11).

2. Anordnung nach Anspruch 1,
**dadurch gekennzeichnet, dass**
die Ausgleichsvorrichtung (40) und/oder mindestens eine der mindestens einen Scanachse (45, 47, 63) in dem oder, vorzugsweise unmittelbar, an dem Beobachtungsinstrument (11) angeordnet ist.

3. Anordnung nach einem der vorhergehenden Ansprüche,
**dadurch gekennzeichnet, dass**
das Beobachtungsinstrument (11) drehbar um die mindestens eine Ausgleichsachse (48, 56, 58) und/oder die mindestens eine Scanachse (45, 47, 63) angeordnet ist.

4. Anordnung nach einem der vorhergehenden Ansprüche,
**dadurch gekennzeichnet, dass**
die Ausgleichsvorrichtung (40) mindestens ein Reflexionselement (60) umfasst, das drehbar um die mindestens eine Ausgleichsachse (48, 56, 58) und/oder die mindestens eine Scanachse (45, 47, 63) angeordnet ist.

5. Anordnung nach einem der vorhergehenden Ansprüche,
**dadurch gekennzeichnet, dass**
die Ausgleichsvorrichtung (40) eine Montierung (39) mit mindestens einer Montierungsachse umfasst, wobei die mindestens eine Ausgleichsachse (48, 56, 58) durch mindestens eine der mindestens einen Montierungsachse gebildet ist.

6. Anordnung nach Anspruch 5,
**dadurch gekennzeichnet, dass**
die Montierung (39) als parallaktische Montierung (42) ausgebildet ist, wobei die mindestens eine Montierungsachse eine Deklinationsachse (44) und eine Rektaszensionsachse (46) umfasst, und wobei die mindestens eine Ausgleichsachse (48) durch die Rektaszensionsachse (46) gebildet ist.

7. Anordnung nach Anspruch 6,
**dadurch gekennzeichnet, dass**
die mindestens eine Scanachse (45, 47) durch die Deklinationsachse (44) und/oder die Rektaszensionsachse (46) gebildet ist.

8. Anordnung nach Anspruch 5,
**dadurch gekennzeichnet, dass**
die Montierung (39) als azimutale Montierung (50) ausgebildet ist, wobei die mindestens eine Montierungsachse eine Elevationsachse (52) und eine Azimutachse (54) umfasst, und wobei die mindestens eine Ausgleichsachse (56, 58) durch die Elevationsachse (52) und die Azimutachse (54) gebildet ist.

9. Anordnung nach Anspruch 8,
**dadurch gekennzeichnet, dass**
die mindestens eine Scanachse (45, 47) durch die Elevationsachse (52) und/oder die Azimutachse (54) gebildet ist.

10. Anordnung nach einem der Ansprüche 5, 6, oder 8,
**dadurch gekennzeichnet, dass**
die mindestens eine Scanachse (63) durch mindestens eine von der mindestens einen Montierungsachse verschiedene Zusatzachse (62) gebildet ist.

11. Anordnung nach einem der vorhergehenden Ansprüche,
**dadurch gekennzeichnet, dass**
die mindestens eine Scanachse (45, 47, 63) mit dem mindestens einen elektronischen Bildsensor (24) korreliert ist.

12. Anordnung nach einem der vorhergehenden Ansprüche,
**dadurch gekennzeichnet, dass** zumindest eine der folgenden Komponenten eine elektronische Schnittstelle aufweist:
• die Bilderzeugungsvorrichtung (18),
• der Spektrograph (20),
• der mindestens eine elektronische Bildsensor (24),
• die Ausgleichsvorrichtung (40),
• die mindestens eine Scanachse (45, 47, 63).

13. Verfahren zum Bewegen eines Himmelskörperbildes gegenüber einem Beobachtungsinstrument (11) unter Verwendung einer Anordnung (38) nach einem der Ansprüche 1 bis 12,
wobei das Beobachtungsinstrument (11) drehbar um die mindestens eine Ausgleichsachse (48, 56, 58) und die mindestens eine Scanachse (45, 47, 63) angeordnet ist, mit folgenden Schritten:
• Erzeugen eines in oder auf dem Beobachtungsinstrument (11) angeordneten Himmelskörperbildes mittels der Bilderzeugungsvorrichtung (18),
• Ausgleichen der durch die Erdrotation hervorgerufenen Relativbewegung zwischen dem Himmelskörperbild und dem Beobachtungsinstrument (11) mittels der Ausgleichsvorrichtung (40) durch Drehen des Beobachtungsinstruments (11) um die mindestens eine Ausgleichsachse (48, 56, 58),
• Erzeugung einer Relativbewegung zwischen dem Himmelskörperbild und dem Beobachtungsinstrument (11) durch Drehen des Beobachtungsinstruments (11) um die mindestens eine Scanachse (45, 47,63).

14. Verfahren zum Bewegen eines Himmelskörperbildes gegenüber einem Beobachtungsinstrument (11) unter Verwendung einer Anordnung (38) nach Anspruch 4 oder nach Anspruch 4 und einem der Ansprüche 5 bis 12,
wobei das mindestens eine Reflexionselement (60) drehbar um die mindestens eine Ausgleichsachse (48, 56, 58) und die mindestens eine Scanachse (45, 47, 63) angeordnet ist, mit folgenden Schritten:
• Erzeugen eines in oder auf dem Beobachtungsinstrument (11) angeordneten Himmelskörperbildes mittels der Bilderzeugungsvorrichtung (18),
• Ausgleichen der durch die Erdrotation hervorgerufenen Relativbewegung zwischen dem Himmelskörperbild und dem Beobachtungsinstrument (11) mittels der Ausgleichsvorrichtung (48, 56, 58) durch Drehen des mindestens einen Reflexionselements (60) um die mindestens eine Ausgleichsachse (48, 56, 58),
• Erzeugung einer Relativbewegung zwischen dem Himmelskörperbild und dem Beobachtungsinstrument (11) durch Drehen des mindestens einen Reflexionselements (60) um die mindestens eine Scanachse (45, 47, 63).

15. Verfahren zum Bewegen eines Himmelskörperbildes gegenüber einem Beobachtungsinstrument (11) unter Verwendung einer Anordnung (38) nach Anspruch 4 oder nach Anspruch 4 und einem der Ansprüche 5 bis 12,
wobei das mindestens eine Reflexionselement (60) drehbar um die mindestens eine Ausgleichsachse (48, 56, 58) und das Beobachtungsinstrument (11) drehbar um die mindestens eine Scanachse (63) angeordnet ist, mit folgenden Schritten:
• Erzeugen eines in oder auf dem Beobachtungsinstrument (11) angeordneten Himmelskörperbildes mittels der Bilderzeugungsvorrichtung (18),
• Ausgleichen der durch die Erdrotation hervorgerufenen Relativbewegung zwischen dem Himmelskörperbild und dem Beobachtungsinstrument (11) mittels der Ausgleichsvorrichtung (40) durch Drehen des mindestens einen Reflexionselements (60) um die mindestens eine Ausgleichsachse (48, 56, 58),
• Erzeugung einer Relativbewegung zwischen dem Himmelskörperbild und dem Beobachtungsinstrument (11) durch Drehen des Beobachtungsinstruments (11) um die mindestens eine Scanachse (63).
